# FASCICULE DE BREVET EUROPEEN

(11) **EP 0 791 167 B1**
(45) Date de publication et mention de la délivrance du brevet: **07.07.1999**
(21) Numéro de dépôt: 95936399.5
(22) Date de dépôt: 08.11.1995
(51) Int. Cl.: G01B 7/14, G01B 13/12

(54) **METHODE ET DISPOSITIF POUR EVALUER DE FACON QUANTITATIVE LE CALAGE D'UN ALTERNATEUR**
VERFAHREN UND VORRICHTUNG ZUM QUANTITATIVEN AUSWERTEN DES FESTSETZUNGSGRADES IN EINER DYNAMOELEKTRISCHEN MASCHINE
METHOD AND DEVICE FOR QUANTITATIVELY DETERMINING THE SETTING OF AN ALTERNATOR

(30) Priorité: 08.11.1994 US 337397
(43) Date de publication de la demande: 27.08.1997
(73) Titulaire: HYDRO QUEBEC, Montréal H2Z 1A4, Québec (CA)
(72) Inventeur: LAVALLEE, Jean, Longueuil, Québec J4G 2N3 (CA); LAVIGNE, Pierre, Boucherville, Québec J4B 6R9 (CA); RONDOT, Pascale, Montréal, Québec H2W 2M4 (CA); VERONNEAU, Léon, Saint-Lambert, Québec J4P 2P4 (CA); MONGENOT, Patrick, Saint Bruno, Québec J3V 1E9 (CA)
(74) Mandataire: Ahner, Francis
(86) Numéro de dépôt international: CA9500644
(87) Numéro de publication internationale: WO9614555

(56) Documents cités:
- EP-A- 0 129 741
- EP-A- 0 415 042
- WO-A-94/18574
- DE-A- 3 438 468
- US-A- 4 889 000
- US-A- 4 901 572

## Description

### ARRIÈRE-PLAN TECHNOLOGIQUE DE L'INVENTION

### a) domaine de l'invention

La présente invention a pour objet une méthode pour évaluer de façon quantitative le calage d'un alternateur.

L'invention a également pour objet un dispositif pour mettre en oeuvre cette méthode.

Dans la description qui suit on entend par "alternateur" aussi bien les hydroalternateurs que les turboalternateurs, qu'ils soient à arbre vertical ou horizontal.

### b) brève description de l'art antérieur

Comme chacun sait, tout alternateur comprend un rotor et un stator définissant ensemble un entrefer de largeur donnée. En pratique, le stator est habituellement constitué de plaques de métal superposées dans lesquelles sont prévues des encoches radiales ayant des embouchures donnant sur l'entrefer. Dans chacune de ces encoches est retenue au moins une et plus fréquemment deux barres dites "statoriques". Cette retenue est effectuée à l'aide de moyens de retenue élastiques qui peuvent être constitués d'une bourre de caoutchouc ou d'une lame de ressort elle-même constituée d'une longue feuille de matériau composite ondulée longitudinalement ou courbée radialement. Ces moyens de retenue élastiques viennent prendre appui soit directement, soit par l'intermédiaire de bandes de glissement et/ou de coins, sur de petites cales de quelques centimètres de long, glissées et retenues dans un jeu de dents symétriques prévues à cet effet dans les plaques de métal du stator, à l'embouchure de l'encoche correspondante. Ces cales qui sont également faites de matériau composite de préférence à base de fibre de verre, sont extrêmement nombreuses dans les gros alternateurs comme ceux entraînés par les turbines d'un barrage, puisque, dans ce cas, le stator de chaque alternateur peut comprendre jusqu'à 500 encoches autour de sa périphérie, et avoir une hauteur de plusieurs mètres de haut.

II est connu que l'une des principales causes d'interruptions forcées des alternateurs utilisés dans les centrales hydroélectriques est due à des défauts dans les enroulements statoriques, qui sont eux-mêmes dus aux vibrations que peuvent subir les barres statoriques si les cales servant à les retenir sont mal montées dans leurs fentes ou si les bourres de caoutchouc ou ressorts disposés entre ces cales et les barres statoriques se relâchent à l'usage. Dans un tel cas, il y a en effet usure prématurée et risque majeur de court-circuit. Il est donc de pratique habituelle de vérifier à intervalles réguliers si les barres statoriques sont toujours bien calés.

La méthode couramment utilisée pour évaluer le "calage" d'un alternateur, i.e. pour détecter si les barres statoriques de celui-ci sont bien calées, consiste à tapoter avec un marteau sur chacune des cales et détecter au son si celles-ci sont toujours bien maintenues dans leurs fentes par la pression exercée par les moyens de retenue se trouvant en arrière de celles-ci. Cette méthode est simple et efficace mais présente deux inconvénients majeurs. Tout d'abord, elle exige un démantèlement complet ou partiel du rotor pour permettre à un opérateur d'aller effectuer le tapotement requis, ce qui ne peut se faire que dans certaines occasions importantes. Ensuite, elle est purement subjective, puisque la détermination du degré de "serrage" des cales selon le son émis est laissée exclusivement au jugement de l'opérateur qui, tout entraîné qu'il soit, peut se tromper.

Pour tenter de remédier à ces deux inconvénients, il a été suggéré par la société ELIN-UNION A.G. d'Autriche, d'exciter les cales d'un alternateur sans enlever le rotor de celui-ci, à l'aide d'un micro-percuteur capable d'être inséré dans un entrefer de largeur supérieure à 10 mm. Le son résultant de cette excitation est capté à l'aide d'un microphone et peut être évalué soit par un opérateur à l'aide d'écouteur, soit par un système informatisé d'analyse électronique du son. Une méthode similaire a également été suggérée par la société WESTINGHOUSE ELECTRIC CORPORATION des États-Unis (voir le brevet U.S. 4.970.890 délivré le 20 novembre 1990).

Dans sa demande de brevet allemand DE 3.438.468 publiée le 20 juin 1985, la société ELIN-UNION A.G. également suggéré d'évaluer le calage d'un alternateur sans enlever le rotor de celui-ci, à l'aide d'un capteur d'épaisseur inférieure à la largeur de l'entrefer, qui comprend un élément mobile actionnable à distance grâce à des coins montés à l'extrémité d'un piston opérable au moyen d'un fluide hydraulique. En usage, le capteur est inséré dans l'entrefer et placé devant la cale où une évaluation est requise de façon à ce que l'élément mobile soit vis-à-vis de la cale. On opère alors le piston et l'on mesure la pression "P" du fluide injecté en même temps que le déplacement longitudinal du piston qui, grâce aux coins qu'il supporte, cause un déplacement transversal "L" simultané et de valeur aisément calculable de l'élément mobile. La courbe de pression "P" en fonction du déplacement "L" ainsi obtenue permet d'évaluer la force appliquée par les moyens de retenue élastiques (bourre de caoutchouc ou lame de ressort).

Si cette méthode est très efficace, elle n'est, au dire du fabricant lui-même, utilisable que dans des entrefers de largeur supérieure à 20 mm. En outre, elle semble difficile à mettre en oeuvre sur des gros alternateurs, car aucun moyen ne semble être prévu pour s'assurer d'un bon positionnement du capteur et de son élément mobile en face de chaque cale à vérifier.

Une méthode similaire a été suggérée par la société WESTINGHOUSE ELECTRIC CORPORATION, qui, dans son brevet U.S. 5.012.684 du 7 mai 1991, décrit une méthode pour évaluer le calage d'un alternateur utilisant un capteur spécialement conçu pour mesurer la force appliquée par la bourre de caoutchouc ou la lame de ressort maintenant les cales par mesure de la valeur du déplacement de cette bourre ou cette lame en fonction de la pression exercée. Dans ce cas particulier, les encoches de plaques de stator dans lesquelles sont disposées les barres statoriques se doivent d'être pourvues de deux jeux de dents, une pour les cales, l'autre pour le capteur, ce qui rend ce dernier inutilisable à moins que l'alternateur ne soit de ce type.

WESTINGHOUSE ELECTRIC CORPORATION a proposé un autre type de capteur insérable dans l'entrefer d'un alternateur pour mesurer la déflexion de la lame de ressort des cales. Cet autre capteur qui fait l'objet du brevet U.S. 5.020.234 du 4 juin 1991, est très compliqué du point de vue structurel. En outre, s'il n'exige pas un second jeu de dents, il exige des cales pourvues de perforations, car il est conçu pour mesurer la déflexion de la lame du ressort par contact sur celle-ci à l'aide d'une tige qu'il convient d'aligner en face de la perforation choisie, à l'aide d'une caméra de télévision miniature.

### OBJETS ET RÉSUMÉ DE L'INVENTION

La présente invention a pour objet une méthode pour évaluer de façon quantitative le calage d'un alternateur, laquelle présente le grand avantage de n'avoir aucun des inconvénients ni aucune des limitations des méthodes déjà connues ci-dessus rappelées.

Plus précisément, l'invention a pour objet une méthode pour évaluer le calage d'un alternateur, qui, grâce entre autres à l'utilisation d'un nouveau capteur à la fois très simple, très mince et très efficace spécialement conçu à cet effet, présente les avantages suivants:
- elle utilise des moyens de structure très simple;
- on peut la mettre en oeuvre sans avoir à enlever ou démanteler le rotor de l'alternateur;
- on peut la mettre en oeuvre dans n'importe quel alternateur, même lorsque l'entrefer de celui-ci a une largeur aussi mince que 10 mm;
- elle permet d'obtenir une évaluation quantitative du pourcentage équivalent de compression des moyens de retenue élastiques maintenant les cales, et ce de façon simple, efficace, sûre et reproductible; et
- sa mise en oeuvre peut être très aisément automatisée.

Comme toutes les méthodes précédemment mentionnées, la méthode selon l'invention est destinée à évaluer de façon quantitative le calage d'un alternateur comprenant un rotor et un stator définissant ensemble un entrefer de largeur donnée, le stator étant pourvu d'encoches radiales ayant des embouchures donnant sur l'entrefer et dans chacune desquelles est retenue au moins une barre statorique à l'aide de moyens de retenue élastiques (bourre de caoutchouc ou lame de ressort ondulée longitudinalement ou radialement), qui prennent appui sur des cales glissées dans un jeu de dents symétriques prévues à cet effet dans le stator à l'embouchure de chaque encoche.

Tout comme la méthode décrite dans la demande de brevet allemand DE 3.438.468, la méthode selon l'invention est du type dans lequel:
(a) on insère dans l'entrefer un capteur pourvu d'un élément mobile capable de se déplacer dans une direction transversale à cet entrefer sous l'effet d'une pression exercée par un fluide;
(b) on positionne le capteur devant la cale où une évaluation est requise de façon à ce que son élément mobile fasse face à la cale;
(c) on exerce une pression à l'aide du fluide pour déplacer l'élément mobile du capteur et amener cet élément à contacter la cale puis presser sur celle-ci tandis que le capteur se trouve adossé au rotor;
(d) on mesure la pression ainsi exercée, cette pression étant proportionnelle à la force appliquée sur la cale pour compresser les moyens de retenue élastiques en arrière de ladite cale;
(e) on mesure le déplacement de la cale lorsque la pression est exercée; et
(f) on détermine le calage à l'aide de la force et du déplacement ainsi mesurés.

La méthode selon l'invention se distingue toutefois de cette méthode connue en ce que:
(g) le capteur utilisé a un bâti ayant la forme d'une plaque mince d'épaisseur légèrement inférieure à la largeur de l'entrefer, et dont une face est pourvue d'un retrait jouant le rôle d'un cylindre dans lequel est monté un piston jouant le rôle de l'élément mobile ci-dessus mentionné, ce piston étant actionnable à distance en injectant le fluide sous pression dans le cylindre; et
(h) la mesure du déplacement de la cale s'effectue en mesurant le déplacement du piston dans son cylindre au moyen d'au moins une et de préférence deux lames flexibles ayant une première extrémité fixée de façon rigide au bâti du capteur, une seconde extrémité montée sur le piston de façon à se déplacer avec celui-ci, et une partie centrale sur laquelle est fixée au moins une et de préférence deux ou quatre jauges de contrainte extensiométrique donnant un signal proportionnel au déplacement du piston et, de là, au déplacement de la cale lorsque celle-ci est pressée.

D'un point de vue pratique, la détermination proprement dite du calage peut s'effectuer selon une première méthode qui peut être mise en oeuvre:
(1) soit en exerçant une pression constante et en mesurant le déplacement; ou
(2) soit en fixant une longueur de déplacement et en mesurant la pression requise pour l'atteindre.

Avant de ce faire, il peut être intéressant de procéder à un étalonnage approprié, en dressant en laboratoire les courbes de force-déplacement à différents taux initiaux de compression pour le type de moyens de retenue élastiques à évaluer.

A partir de ces courbes de force-déplacement, une courbe d'étalonnage du déplacement engendré par une force F donnée ou de la force F nécessaire pour atteindre un déplacement fixe en fonction du taux initial de compression peut alors être tracée. Le pourcentage équivalent de compression de la cale testée peut ensuite être déduit directement de la mesure du déplacement engendré par la force F donnée appliqué sur la cale ou de la mesure de la pression nécessaire pour déplacer la cale d'une longueur donnée en utilisant las courbes d'étalonnage.

L'évaluation du calage peut également être effectué selon une seconde méthode consistant à évaluer l'ordonnée à l'origine des courbes de force en fonction du déplacement, ce qui correspond à la force appliquée par les moyens de retenue élastiques sur les barres statoriques. Dans ce cas, l'ordonnée à l'origine peut être obtenue par traitement informatique des courbes.

Si besoin est, une analyse comparative des courbes de force en fonction du déplacement de moyens de retenue élastiques neufs et usagés peut être faite pour obtenir une indication de l'état mécanique de ces moyens lors des mesures.

Tel qu'il a précédemment été mentionné, le capteur utilisé pour mettre en oeuvre l'invention est muni d'un piston miniature et d'un système de lames de ressort. Sa structure lui permet d'être aussi mince que 10 mm, ce qui le rend utilisable dans l'entrefer de la plupart des alternateurs existants. La mesure de la force s'effectue à partir d'un capteur de pression du fluide, et celle du déplacement provient des lames de ressort munies de jauges de contrainte mesurant directement leur flèche,c'est-à-dire le déplacement du piston. Le système peut être complété par une console comprenant les modules de contrôle, d'acquisition, d'analyse et un écran vidéo.

Un système de positionnement automatisé peut également être prévu pour déplacer et positionner automatiquement le capteur d'une cale à l'autre, puis d'une fente à l'autre. Une caméra peut également être prévue pour faciliter le positionnement du capteur en usage manuel et assurer une inspection visuelle des trous de ventilation et de la surface du noyau du stator ainsi qu'une vérification du système piston/cale/lame lorsque ceci est désiré.

Tel que précédemment indiqué, l'invention a également pour objet un dispositif spécialement conçu pour mettre en oeuvre la méthode ci-dessus décrite.

L'invention et ses divers avantages ressortiront mieux de la description non limitative qui va suivre d'un mode de réalisation préféré de celle-ci, faite en se référant aux dessins annexés.

### BRÈVE DESCRIPTION DES DESSINS

La figure 1 est une vue schématique en coupe partielle de côté d'un dispositif selon l'invention pour évaluer le calage d'un alternateur, ce dispositif étant illustré en position d'usage, avec le capteur inséré dans l'entrefer de l'alternateur face à une cale dont le pourcentage de compression est à déterminer;
la figure 2 est une vue en coupe transversale de la figure 1, selon la ligne II-II;
la figure 3 est une vue de face du dispositif illustrée sur la figure 1;
la figure 4a est une vue de face du capteur du dispositif illustré sur les figures 1 à 3;
la figure 4b est une vue en coupe du capteur selon la ligne IV-IV de la figure 4a;

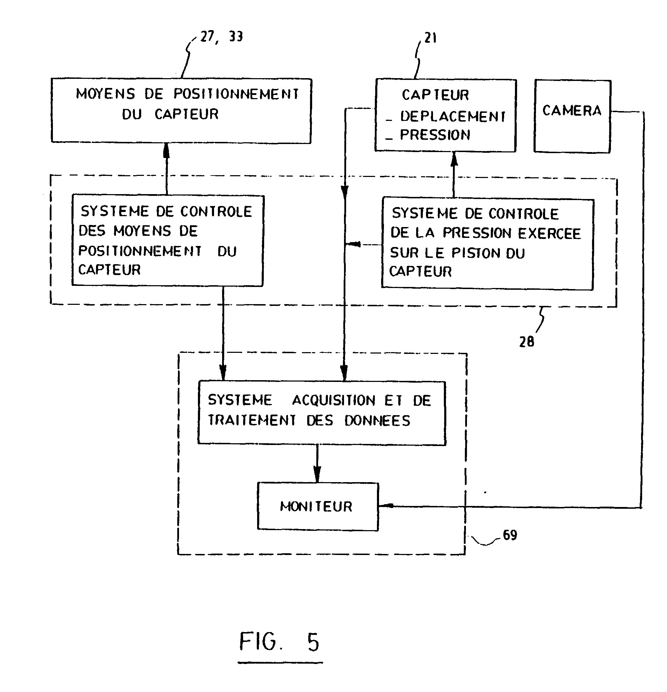

la figure 5 est un schéma bloc du circuit de contrôle de ce dispositif;
la figure 6 est un graphique montrant la force appliquée par le capteur en fonction du déplacement mesuré pour différents taux de compression;
la figure 7 est un graphique montrant le déplacement engendré par une même force pour différents taux de compression; et
la figure 8 est un graphique montrant la force nécessaire pour obtenir un même déplacement pour différents taux de compression.

### DESCRIPTION D'UN MODE DE RÉALISATION PRÉFÉRÉ DE L'INVENTION

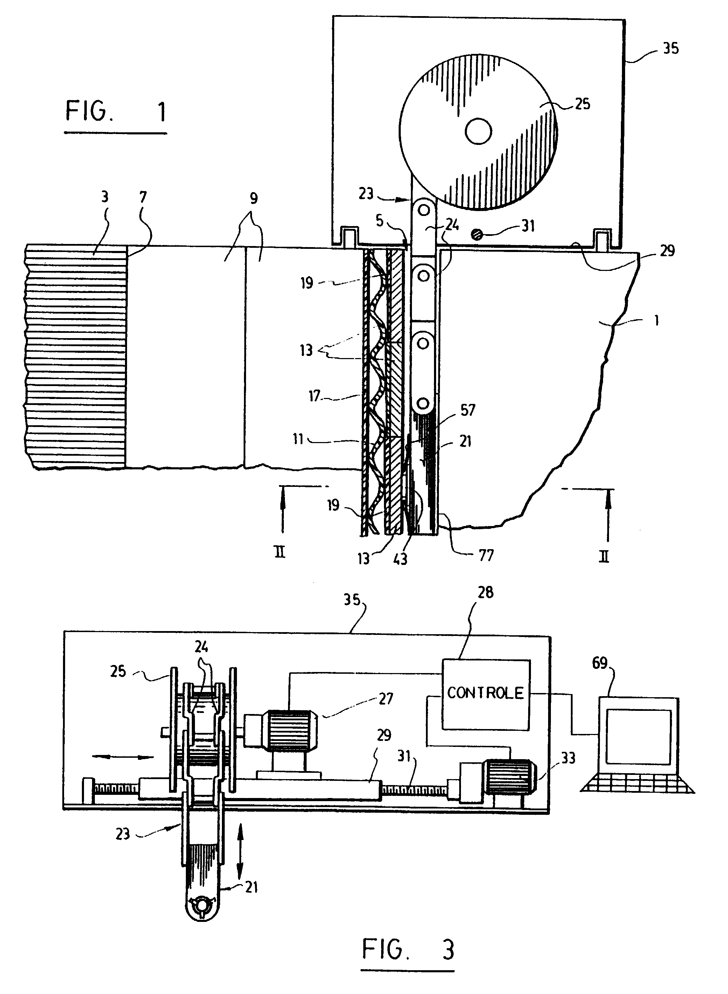

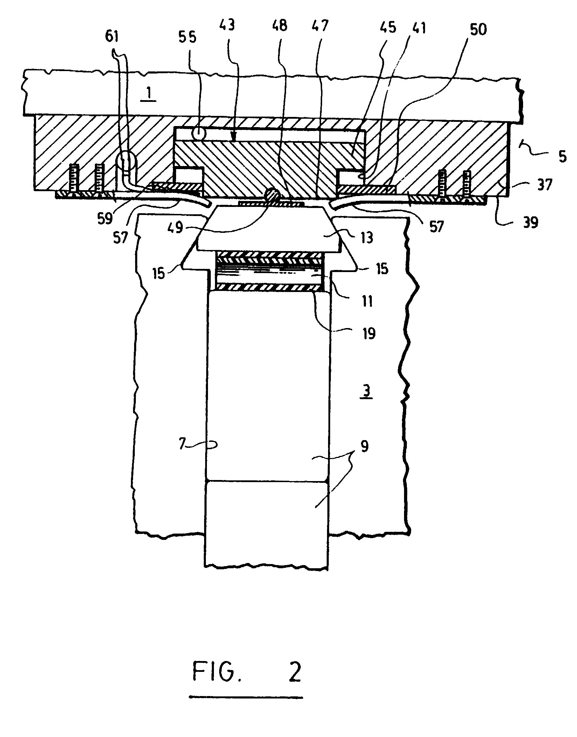

Tel que précédemment expliqué, la méthode ainsi que le dispositif selon l'invention sont destinés à évaluer de façon quantitative le calage d'un alternateur comprenant un rotor 1 et un stator 3 définissant ensemble un entrefer 5 de largeur donnée (voir figures 1 et 2). Le stator 3 est pourvu d'encoches radiales 7 ayant des embouchures donnant sur l'entrefer et dans chacune desquelles sont retenues une ou plus généralement deux barres statoriques 9 à l'aide de moyens de retenue élastiques qui peuvent être constitués de bourres de caoutchouc ou matériau similaire, ou de lames de ressort faites de matériau composite ondulé longitudinalement ou courbé radialement. Sur les dessins annexés et dans la description qui suit, les moyens de retenue élastiques illustrés sont constitués par une lame de ressort 11 ondulée longitudinalement, qui prend appui sur des cales 13 de section trapézoïdale glissées dans un jeu de dents 15 symétriques prévues à cet effet dans le stator à l'embouchure de chaque encoche 7. On comprendra toutefois que l'invention n'est pas exclusivement limitée à ce type de lame de ressort illustrée.

La lame de ressort 11 constituée d'une longue feuille ondulée de matériau composite, prend appui soit directement, soit par l'intermédiaire de bandes de glissement ou languettes de paquetage 17 et de coins 19, sur la barre statorique adjacente 9 et sur les cales 13 qui sont elles-mêmes également faites en matériau composite.

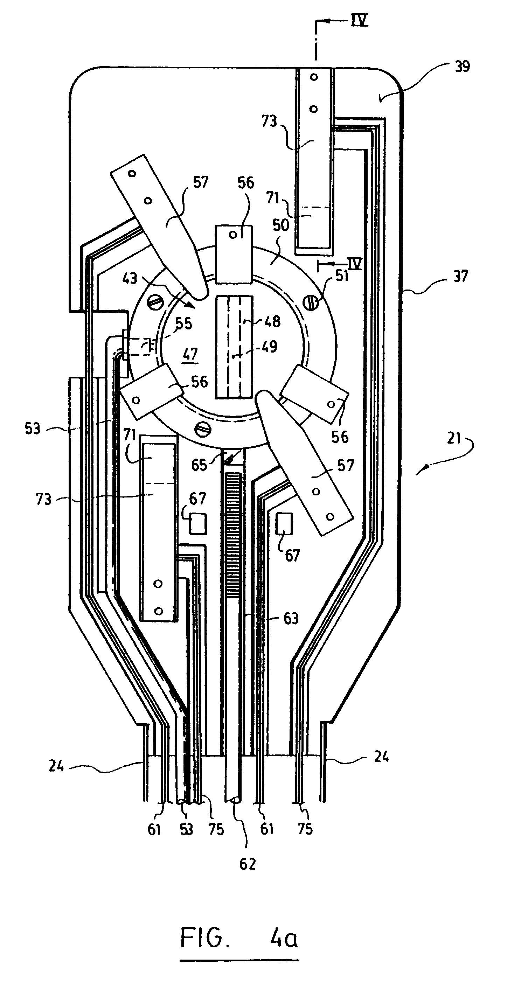

Tel qu'il est mieux illustré sur les figures 1 et 3, le dispositif selon l'invention comprend un capteur 21 dimensionné pour pouvoir être inséré dans l'entrefer 5. La structure de ce capteur qui est un élément essentiel de l'invention sera décrite plus en détail ci-après.

Le dispositif comprend également des moyens pour positionner le capteur devant chaque cale 13 où une évaluation est requise. Ces moyens incluent de préférence un premier système mécanique permettant de déplacer le capteur 21 le long de chaque encoche radiale 7 et un second système mécanique permettant de déplacer ce même capteur d'une encoche donnée à une ou plusieurs autres encoches adjacentes.

Tel qu'il est illustré, le premier de ces deux systèmes mécaniques inclut une chaîne 23 composés de maillons 24 ne pouvant pivoter que sur un seul axe les uns par rapport aux autres. Cette chaîne 23 est enroulée sur un tambour 25 et a une extrémité libre déroulable dans l'entrefer et à laquelle est fixé le capteur 21. Le tambour est lui-même entraîné soit manuellement, soit électriquement par un moteur 27 qui peut être relié à un système de contrôle approprié, pour déplacer automatiquement le capteur le long de chaque encoche radiale 7 de façon à ce que ce capteur 21 vienne se positionner en face de chacune des cales 13 successives glissées dans les dents 15 de l'encoche.

Le second des deux systèmes mécaniques ci-dessus mentionnés peut inclure, quant à lui, un chariot 29 sur lequel le premier système mécanique est monté et des moyens tel qu'une vis-sans-fin 31 entraînée par un moteur électrique 33, pour déplacer ce chariot en translation. Ce moteur 33 peut bien sûr être lui aussi relié au système de contrôle 28 pour assurer un déplacement automatique du capteur d'une encoche 7 à une ou plusieurs autres encoches adjacentes.

Ces systèmes mécaniques sont simples et peu encombrants. Ils peuvent être disposés dans un boîtier 35 transportable comme un kit et conçu pour être facilement installé à l'aide d'électro-aimants sur un alternateur, juste au dessus de la portion de l'entrefer où les cales sont à évaluer. Lorsque cela est possible, le boîtier peut avantageusement être monté sur le rotor de l'alternateur de façon à pouvoir tourner avec celui-ci pour ainsi couvrir la totalité de la circonférence du stator à inspecter.

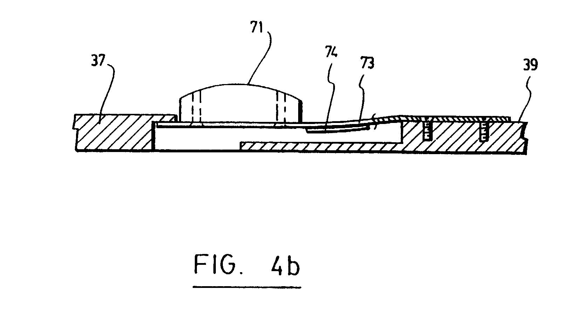

Se référant maintenant plus particulièrement aux figures 2 et 4, le capteur 21 utilisé selon l'invention a un bâti 37 constitué d'une mince plaque de métal dont l'épaisseur "h" est constante et choisie de façon à la rendre insérable dans l'entrefer. Cette épaisseur "h" est de préférence inférieure ou égale à 10 mm.

Le bâti mince 37 est fixé à une extrémité au dernier maillon 24 de la chaîne. Il a une face 39 pourvu d'un retrait 41 de préférence cylindrique, jouant le rôle d'un cylindre de piston dans lequel un piston 43 est monté de façon mobile. Le piston est pourvu d'une tête 45 de même diamètre que le retrait 41 et d'une courte tige coaxiale 47 éventuellement pourvue d'un embout pivotant 48 monté sur une rotule cylindrique 49 (voir figure 2). Cet embout pivotant 48 vient s'ajuster à la surface de cale 13 et évite que la pression soit exercée en porte-à-faux et crée un moment.

Le piston 43 est retenu dans le retrait à l'aide d'une bague de retenue 50 fixée à la périphérie du retrait 41 à l'aide de vis 51.

Le piston 43 est actionnable à distance à l'aide de moyens permettant l'injection d'un fluide sous pression de préférence constitué par de l'air dans le retrait 41 du bâti, en arrière de la tête 45 du piston. Ces moyens d'injection incluent une source d'air comprimé non illustré, une conduite d'amenée d'air 53 inclus dans la chaîne, et un passage 55 façonné dans le bâti du capteur, et débouchant dans le retrait. Ils ont essentiellement pour but d'exercer une pression à l'aide du fluide ainsi injecté de façon à déplacer le piston 43 dans une direction transversale à l'entrefer 5 lorsque le capteur 21 est inséré dans ce dernier, en vue d'amener ce piston à presser la cale 13 qui lui fait face tandis que le capteur se trouve adossé au rotor 1. Des moyens de rappel constitués par des petites lames de ressort 56 servent à ramener le piston 43 dans son cylindre dès que l'injection de fluide sous pression est stoppée.

Des moyens non illustrés mais bien connus en soi sont prévus pour mesurer la pression ainsi exercée lorsque le piston 43 appuie sur la cale 13. On comprendra ici que la pression ainsi exercée est proportionnelle à la force appliquée par la lame de ressort 11 en arrière de la cale 13.

D'autres moyens sont également prévus pour mesurer le déplacement de la cale 13 lorsque la pression est exercée. Ces autres moyens en fait mesurent le déplacement du piston 43 dans son cylindre 41. À cet effet, ils comprennent au moins une et de préférence deux lames instrumentées flexibles 57 ayant chacune une première extrémité fixée de façon rigide à l'aide de vis à la face 39 du bâti 37 du capteur, une seconde extrémité appuyée sur la tête 45 du piston 43 de façon à se déplacer avec celui-ci, et une partie centrale. Sur au moins une de ces parties centrales est fixée au moins une et de préférence deux ou quatre jauges de contrainte extensiométriques 59 reliées par un filage approprié 61 à un appareil de mesure (non illustré). Lorsque le piston se déplace, les lames 57 qui jouent également le rôle de ressorts de rappel, se plient et causent un changement de résistivité du fil de la jauge 59. Cette dernière donne alors un signal proportionnel au déplacement du piston 43 et, de là, au déplacement de la cale 13 lorsque celle-ci est pressée.

Selon un mode préféré de réalisation de l'invention tout particulièrement utile lorsque le positionnement du capteur est fait manuellement, un système de visualisation peut être prévu pour permettre à un opérateur de repérer chaque cale et de positionner le capteur 21 par rapport à celle-ci. Ce système de visualisation peut inclure une micro-caméra ou un fibroscope tels que ceux utilisés en endoscopie. Dans ce dernier cas, la fibre optique 62 de ce système de visualisation a une extrémité servant de lunette, qui est monté sur le capteur 21 dans une cavité 63 prévue à cet effet dans le bâti 37 (voir figure 4), transversalement au piston 43.

L'extrémité de cette fibre optique 62 servant de lunette est orientable à distance à volonté tel qu'il est connu en soi, et fait face à un miroir à 45° numéroté 65, qui est incorporé dans la cavité 63. Avantageusement, des moyens d'éclairage 67 additionnels à ceux du système de visualisation peuvent également être incorporés au bâti 37 du capteur pour faciliter la visualisation de la cale à évaluer à l'aide de la fibre optique 62 et du miroir 65.

En pratique, le dispositif précédemment décrit une fois installé peut être utilisé comme suit:
(a) on insère dans l'entrefer 5 le capteur 21;
(b) on positionne ce capteur devant la cale 13 où une évaluation est requise, de préférence au centre de celle-ci de façon à ce que le piston 43 fasse face à la cale en question;
(c) on exerce une pression ou bien constante ou bien variable à l'aide d'air compressé ou de tout autre fluide pour déplacer le piston 43 du capteur et amener ce piston à contact la cale 13 puis à presser sur celle-ci tandis que le capteur se trouve adossé au rotor 1;
(d) on mesure la pression ainsi exercée, cette pression étant proportionnelle à la force appliquée par la cale du ressort 11 (ou la bourre de caoutchouc) en arrière de la cale;
(e) on mesure le déplacement de la cale à l'aide des jauges de contrainte 59 fixées sur les lames flexibles lorsque la pression est exercée; et
(f) on détermine le pourcentage équivalent de compression du ressort à l'aide de la force et du déplacement ainsi mesurés selon l'une des méthodes ci-dessus mentionnées.

Cette dernière détermination peut s'effectuer à l'aide d'un système électronique de conditionnement et un système de traitement informatique 69 incorporant un écran vidéo.

Avant d'effectuer les étapes (b) à (f), on procède de préférence à un calibrage du capteur 21 en positionnant celui-ci dans l'entrefer 5 entre des surfaces rigides du rotor 1 et du stator 3, comme par exemple entre deux encoches de ce dernier, puis en effectuant une mesure du déplacement du piston correspondant aux différentes pressions de travail. Dans l'étape (f), on peut alors soustraire la valeur du déplacement ainsi mesurée de la valeur mesurée de ce même déplacement lorsque la pression est exercée sur la cale 13.

Pour éviter d'avoir à procéder à un tel calibrage et plus important encore, pour tenir compte des variations de la largeur de l'entrefer durant les mesures, on peut incorporer dans le bâti 37 du capteur un système de patins 71 montés aux extrémités libres de lames instrumentées flexibles supplémentaires 73, qui sont fixées dans des cavités prévues dans le bâti 37 et sont pourvues de jauges de contrainte extensiométriques 74 reliées par des filages appropriés 75 à l'appareil de mesure. Ces patins 71 sont disposés de façon à faire face, prendre appui et glisser sur la surface du noyau du stator 3 de part et d'autre de l'encoche où s'effectue la mesure. Toute variation d'entrefer provoquera une déflexion des lames 73 et sera mesurée à l'aide des jauges extensiométriques 74 installées sur la partie centrale des lames. Les valeurs mesurées seront soustraites des mesures de déplacement du piston afin d'obtenir le déplacement réel de la cale, et donc du ressort.

En pratique, la détermination du calage à l'étape (f) peut s'effectuer de trois façons.

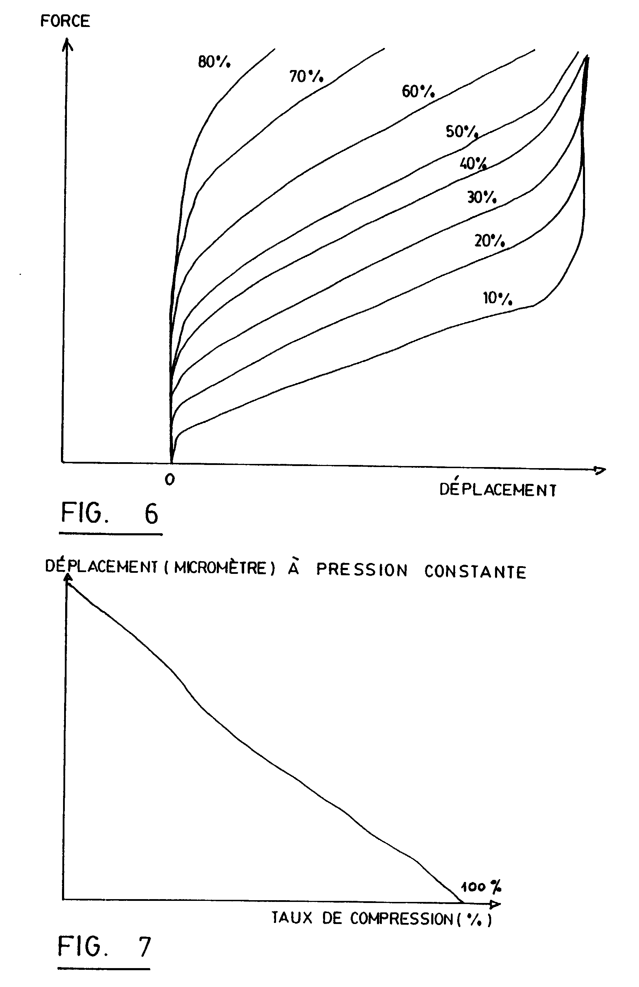

Après calibra approprié, on peut dresser en laboratoire les courbes de force-déplacement mesurées pour le type de moyens de retenue élastiques testé à différents taux initiaux de compression. Une courbe d'étalonnage du déplacement engendré par une force F donnée en fonction du taux initial de compression peut alors être tracée (voir Figure 6). Le taux équivalent de compression de la cale testée peut ensuite être déduit directement de la mesure du déplacement engendré par une force F donnée appliquée sur la cale, en utilisant la courbe d'étalonnage. Ceci est illustré sur la Figure 7. Selon cette méthode, on exerce donc une pression constante et on mesure le déplacement en résultant.

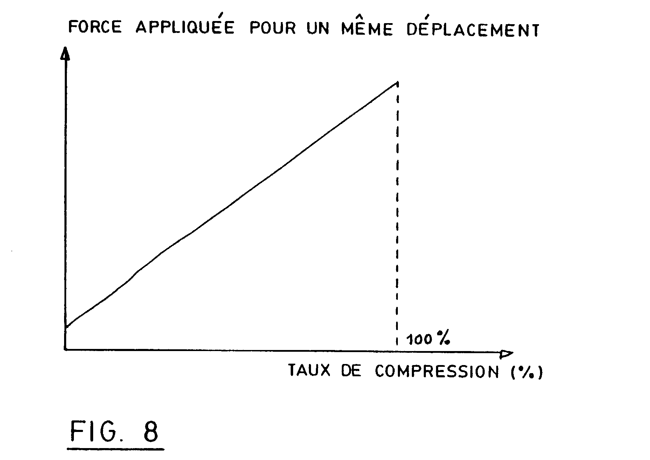

L'évaluation du calage peut également être effectué en fixant une longueur de déplacement donnée et en mesurant la pression requise pour l'atteindre (voir Figure 8).

Selon une autre méthode, on peut aussi évaluer l'ordonnée à l'origine des courbes de force en fonction du déplacement, ce qui correspond à la force actuelle appliquée par le ressort sur les barres statoriques. Il suffit alors de fixer un seuil correspondant à une ordonnée qui elle-même correspond à un pourcentage équivalent de compression désiré, et vérifier si la valeur mesurée de la force appliquée atteint ou non ce seuil (voir Figure 6). Il peut également être intéressant de mesurer la pente de la courbe. Cette ordonnée à l'origine et la pente peuvent être obtenues par traitement informatique.

Tel que précédemment mentionné, le tout peut être aisément automatisé.

Bien entendu, de nombreuses modifications pourraient être apportées au dispositif qui vient d'être décrit à titre illustratif seulement, sans pour autant sortir du cadre de l'invention telle qu'elle est définie dans les revendications annexées. Ainsi, par exemple, le dispositif pourrait inclure également au moins une plaque d'espacement 77 fixable à même le bâti du capteur du côté de celui-ci opposé au piston pour augmenter l'épaisseur dudit capteur et ainsi permettre son utilisation dans un entrefer plus large (voir Figure 1).

## Revendications

1. Une méthode pour évaluer de façon quantitative le calage d'un alternateur comprenant un rotor (1) et un stator (3) définissant ensemble un entrefer (5) de largeur donnée, ledit stator (3) étant pourvu d'encoches radiales (7) ayant des embouchures donnant sur l'entrefer et dans chacune desquelles est retenue au moins une barre statorique (9) à l'aide de moyens de retenue élastiques (11) prenant appui sur des cales (13) glissées dans un jeu de dents (15) symétriques prévues à cet effet dans le stator à l'embouchure de chaque encoche (7), cette méthode étant du type dans lequel:
(a) on insère dans l'entrefer (5) un capteur (21) pourvu d'un élément mobile (43) capable de se déplacer dans une direction transversale audit entrefer sous l'effet d'une pression exercée par un fluide;
(b) on positionne le capteur (21) devant la cale (13) où une évaluation est requise de façon à ce que son élément mobile (43) fasse face à ladite cale;
(c) on exerce une pression à l'aide du fluide pour déplacer l'élément mobile (43) du capteur et amener cet élément à contacter la cale (13) puis presser sur celle-ci tandis que le capteur (21) se trouve adossé au rotor (1);
(d) on mesure la pression ainsi exercée, cette pression étant proportionnelle à la force appliquée sur la cale (13) pour compresser les moyens de retenue élastiques (11) en arrière de ladite cale;
(e) on mesure le déplacement de la cale (13) lorsque la pression est exercée; et
(f) on détermine le calage à l'aide de la force et du déplacement ainsi mesurés,
caractérisée en ce que:
(g) le capteur (21) utilisé a un bâti (37) ayant la forme d'une plaque mince d'épaisseur (h) légèrement inférieure à la largeur dudit entrefer (5) et dont une face (39) est pourvue d'un retrait (41) jouant le rôle d'un cylindre dans lequel est monté un piston (43) jouant le rôle dudit élément mobile, ce piston étant actionnable à distance en injectant le fluide sous pression dans le cylindre (41), et
(h) la mesure du déplacement de la cale (13) s'effectue en mesurant le déplacement du piston (43) dans son cylindre au moyen d'au moins une lame flexible (57) ayant une première extrémité fixée de facon rigide au bâti (37) du capteur, une seconde extrémité montée sur le piston (43) de façon à se déplacer avec celui-ci, et une partie centrale sur laquelle est fixée au moins une jauge de contrainte extensiométrique (59) donnant un signal proportionnel au déplacement dudit piston (43) et, de là, au déplacement de la cale (13) lorsque celle-ci est pressée.

2. Méthode selon la revendication 1, caractérisée en ce qu'avant d'effectuer les étapes (b) à (f), on positionne le capteur (21) dans l'entrefer (5) entre des surfaces rigides du rotor et du stator et on effectue une mesure du déplacement du piston correspondant aux différentes pressions de travail, puis en ce que, dans l'étape (f), on soustrait la valeur du déplacement ainsi mesurée à la valeur mesurée dans ce même déplacement lorsque la pression est exercée sur la cale (13).

3. Méthode selon la revendication 1, caractérisée en ce que, une fois l'étape (b) complétée, on mesure toute variation de la largeur de l'entrefer (5) à l'aide d'au moins une lame instrumentée flexible (74) ayant une extrémité fixée au bâti (37) du capteur (21) et une autre extrémité pourvue d'un patin (71) venant prendre appui et glisser sur une surface rigide du stator (3), puis en ce que dans l'étape (f), on soustrait la valeur de cette variation de la valeur du déplacement mesurée afin d'obtenir la valeur du déplacement réel de la cale (13) lorsque la pression est exercée sur cette dernière.

4. Méthode selon la revendication 2 ou 3, caractérisée en ce que l'étape (b) est effectuée à l'aide de moyens mécaniques (23, 25, 27) permettant de déplacer le capteur (21) le long de chaque encoche radiale (7).

5. Méthode selon la revendication 4, caractérisée en ce que les moyens mécaniques (23, 25, 27) sont contrôlés pour déplacer automatiquement le capteur (21) le long de chaque encoche radiale de façon à ce que ce capteur vienne se positionner face à chacune des cales (13) successives glissées dans les dents (15) de ladite encoche radiale.

6. Méthode selon la revendication 5, caractérisée en ce que les moyens mécaniques (29, 31, 33) permettent également de déplacer le capteur (21) d'une encoche donnée (7) à au moins une autre encoche adjacente.

7. Méthode selon la revendication 4, caractérisée en ce que les moyens mécaniques (23, 25, 27) sont contrôlés manuellement et en ce que le capteur (21) est pourvu d'un système de visualisation à fibre optique (62) permettant à un opérateur de repérer chaque cale (13) et de positionner le capteur (21) par rapport à celle-ci.

8. Méthode selon l'une quelconque des revendications 1 à 3 et 5 à 7, caractérisée en ce que le fluide utilisé est de l'air comprimé.

9. Méthode selon l'une quelconque des revendications 1 à 3 et 5 à 7, caractérisée en ce que l'étape (f) consiste à déterminer le pourcentage équivalent de compression des moyens de retenue élastique (11) en exerçant une pression constante à l'étape (c) et en mesurant la valeur du déplacement ainsi obtenu.

10. Méthode selon l'une quelconque des revendications 1 à 3 et 5 à 7, caractérisée en ce que l'étape (f) consiste à déterminer le pourcentage équivalent de compression des moyens de retenue élastique (11) en fixant une longueur de déplacement et en mesurant la valeur de la pression requise pour l'atteindre.

11. Méthode selon l'une quelconque des revendications 1 à 3 et 5 à 7, caractérisé en ce que l'étape (f) consiste à déterminer le pourcentage équivalent de compression des moyens de retenue élastiques (11) en fixant un seul correspondant à une ordonnée à l'origine des courbes de force en fonction du déplacement et en vérifiant si la valeur mesurée de la force appliquée atteint ou non ce seuil.

12. Dispositif pour évaluer de facon quantitative le calage d'un alternateur comprenant un rotor (1) et un stator (3) définissant ensemble un entrefer (5) de largeur donnée, ledit stator (3) étant pourvu d'encoches radiales (7) ayant des embouchures donnant sur l'entrefer et dans chacune desquelles est retenue au moins une barre statorique (9) à l'aide de moyens de retenue élastiques (11) prenant appui sur des cales (13) glissées dans un jeu de dents (15) symétriques prévues à cet effet dans le stator à l'embouchure de chaque encoche, ce dispositif étant du type comprenant:
(a) un capteur (21) dimensionné pour pouvoir être inséré dans l'entrefer (5), le capteur (21) étant pourvu d'un élément mobile (43) capable de se déplacer dans une direction transversale audit entrefer sous l'effet d'une pression exercée par un fluide;
(b) des moyens (23, 25, 27, 29, 31, 33) pour positionner le capteur (21) devant la cale (13) où une évaluation est requise de façon à ce que l'élément mobile (43) dudit capteur fasse face à ladite cale;
(c) des moyens (53, 54) pour exercer une pression à l'aide du fluide de façon à déplacer l'élément mobile (43) du capteur (21) et l'amener à venir contacter puis presser la cale (13) tandis que le capteur se trouve adossé au rotor (1);
(d) des moyens pour mesurer la pression ainsi exercée, lorsque l'élément mobile (43) appuie sur la cale (13), cette pression étant proportionnelle à la force appliquée sur la cale pour compresser les moyens de retenue élastiques en arrière de ladite cale;
(e) des moyens (57, 59) pour mesurer le déplacement de la cale (13) lorsque la pression est exercée; et
(f) des moyens pour évaluer le calage à l'aide de la force et du déplacement ainsi mesurés,
caractérisée en ce que:
(g) ledit capteur (21) a un bâti (37) ayant la forme d'une plaque mince d'épaisseur (h) légèrement inférieure à la largeur dudit entrefer (5) et dont une face (39) est pourvue d'un retrait (41) jouant le rôle d'un cylindre dans lequel est monté un piston (43) jouant le rôle dudit élément mobile, ce piston étant actionnable à distance en injectant le fluide sous pression dans le cylindre (41); et
(h) lesdits moyens (57, 59) pour mesurer le déplacement de la cale (13) sont constitués par des moyens pour mesurer le déplacement du piston dans son cylindre, ces moyens étant eux-mêmes constitués par au moins une lame flexible (57) ayant une première extrémité fixée de façon rigide au bâti (37) du capteur, une seconde extrémité montée sur le piston (43) de façon à se déplacer avec celui-ci, et une partie centrale sur laquelle est fixée au moins une jauge de contrainte extensiométrique (59) donnant un signal proportionnel au déplacement dudit piston (43) et, de là, au déplacement de la cale (13) lorsque celle-ci est pressée.

13. Dispositif selon la revendication 12, caractérisé en ce que les moyens (b) incluent un premier système mécanique (23, 25, 27) permettant de déplacer le capteur (21) le long de chaque encoche radiale (7).

14. Dispositif selon la revendication 13, caractérisé en ce que le premier système mécanique (23, 25, 27) est opéré par un moteur (27) et en ce qu'un système de contrôle de ce moteur est prévu pour déplacer automatiquement le capteur (21) le long de chaque encoche (7) radiale de façon à ce que ce capteur vienne se positionner face à chacune des cales (13) successives glissées dans les dents (15) de ladite encoche radiale.

15. Dispositif selon la revendication 14, caractérisé en ce que le premier système mécanique (23, 25, 27) inclut une chaîne (23) enroulée sur un tambour (25) entraîné par le moteur (27), cette chaîne ayant une extrémité libre déroulable dans l'entrefer (5) et à laquelle est fixé le capteur (21).

16. Dispositif selon les revendications 13, 14 ou 15, caractérisé en ce que les moyens (b) incluent un second système mécanique (29, 31, 33) permettant de déplacer le capteur (21) d'une encoche (7) donnée à au moins une autre encoche adjacente.

17. Dispositif selon la revendication 16, caractérisé en ce que le second système mécanique (29, 31, 33) inclut un chariot (29) sur lequel le premier système mécanique (23, 25, 27) est monté et des moyens (31) pour déplacer ce chariot en translation.

18. Dispositif selon la revendication 13, caractérisé en ce que le premier système mécanique (23, 25, 27) est contrôlé manuellement et en ce que le capteur (21) est pourvu d'un système de visualisation (62) permettant à un opérateur de repérer chaque cale (13) et de positionner le capteur par rapport à celle-ci.

19. Dispositif selon la revendication 18, caractérisé en ce que le premier système mécanique (23, 25, 27) inclut une chaîne (23) enroulée sur un tambour (25) entraîné par un moteur (27), cette chaîne ayant une extrémité libre déroulable dans l'entrefer (5) et à laquelle est fixé le capteur (21).

20. Dispositif selon la revendication 18 ou 19, caractérisé en ce que le système de visualisation (62) comprend une fibre optique (62) ayant une extrémité servant de lunette, qui est fixée à même le capteur (21).

21. Dispositif selon la revendication 20, caractérisé en ce que l'extrémité de la fibre optique (62) servant de lunette s'étend transversalement au piston (43) dans une cavité (63) prévue dans le bâti (37) du capteur (21) et fait face à un miroir (65) incorporé dans cette même cavité et en ce que des moyens d'éclairage (67) sont prévus au niveau dudit capteur pour faciliter la visualisation de la cale (13) à évaluer à l'aide de la fibre optique (62).

22. Dispositif selon l'une quelconque des revendications 12 à 15, 17 à 19 et 21, caractérisé en ce qu'il inclut en outre au moins une plaque d'espacement (77) fixable à même le bâti (37) du capteur (21) du côté de celui-ci opposé au piston (43) pour augmenter l'épaisseur (h) dudit capteur et ainsi permettre son utilisation dans un entrefer (5) plus large.

23. Dispositif selon l'une quelconque des revendications 12 à 15, 17 à 19 et 21, caractérisé en ce que les moyens (f) incluent un système électronique de conditionnement et un système de traitement informatique (69).

24. Dispositif selon la revendication 23, caractérisé en ce que le fluide injecté est de l'air comprimé et en ce que l'ensemble du dispositif se présente sous la forme d'un kit portatif.

25. Dispositif selon l'une quelconque des revendications 12 à 15, 17 à 19, 21 et 24, caractérisé en ce qu'il comprend également au moins une lame instrumentée flexible (74) ayant une extrémité fixée au bâti (37) du capteur (21) et une autre extrémité pourvue d'un patin (71) venant prendre appui et glisser sur une surface rigide du stator (3), ladite lame instrumentée (74) donnant une mesure de toute variation de la largeur de l'entrefer (5) à l'endroit où se trouve le capteur (21) pour ainsi permettre de déterminer le déplacement réel de la cale (13) lorsque la pression est exercée sur cette dernière.

26. Dispositif selon la revendication 25, caractérisé en ce qu'il comprend deux telles lames instrumentées flexibles (74) fixées au bâti (37) du capteur (21) de façon à ce que leurs patins (71) s'étendent de part et d'autre de l'encoche (7) dans laquelle la cale à évaluer est montée.

## Patentansprüche

1. Verfahren zum quantitativen Bewerten der Verkeilung eines Wechselstromgenerators mit einem Rotor (1) und einem Stator (3), die gemeinsam einen Spalt (5) gegebener Größe begrenzen, wobei der Stator (3) mit radialen Aussparungen (7) versehen ist, die Öffnungen aufweisen, die zum Spalt führen und in denen jeweils wenigstens ein Statorstab (9) mittels elastischer Halteeinrichtungen (11) festgehalten ist, die an Keilen (13) anliegen, die im Spielraum von symmetrischen Zähnen (15) gleiten, die dazu im Stator an der Öffnung jeder Aussparung (7) vorgesehen sind, welches Verfahren von ein Typ ist, bei dem
(a) man in den Spalt (5) einen Meßfühler (21) einsetzt, der mit einem beweglichen Element (43) versehen ist, das sich in einer Richtung quer zu dem besagten Spalt unter dem Einfluß eines von einem Fluid ausgeübten Druckes versetzen kann,
(b) man den Meßfühler (21) vor dem Keil (13) anordnet, wo eine Bewertung erfolgen soll, derart, daß sein bewegliches Element (43) dem besagten Keil zugewandt ist,
(c) man einen Druck mittels des Fluides ausübt, um das bewegliche Element (43) des Meßfühlers zu versetzen und dieses Element in Kontakt mit dem Keil (13) anzuordnen, so daß es dagegen drückt, während sich der Meßfühler (21) am Rotor (1) anlehnt,
(d) man den somit ausgeübten Druck mißt, welcher Druck proportional zu der Kraft ist, die am Keil (13) zum Zusammendrücken der elastischen Halteeinrichtungen (11) an der Rückseite des besagten Keiles liegt,
(e) man die Versetzung des Keils (13) mißt, während der Druck ausgeübt wird, und
(f) man die Verkeilung mittels der Kraft und der Versetzung bestimmt, die in dieser Weise gemessen wurden,
dadurch gekennzeichnet, daß
(g) der Meßfühler (21) ein Halteelement (37) in Form einer dünnen Platte mit einer Dicke (h) verwendet, die etwas unter der Breite des besagten Spaltes (5) liegt, deren eine Außenfläche (39) mit einem Rücksprung (41) versehen ist, der die Funktion eines Zylinders hat, in dem ein Kolben (43) angeordnet ist, der die Funktion des besagten beweglichen Elementes hat, welcher Kolben durch das Einführen des Fluides unter Druck in den Zylinder (41) fernbetätigbar ist, und
(h) die Messung der Versetzung des Keiles (13) dadurch bewirkt wird, daß die Versetzung des Kolbens (43) in seinem Zylinder mittels wenigstens einer flexiblen Zunge (57) gemessen wird, die mit einem ersten Ende fest an dem Halteelement (37) des Meßfühlers angebracht ist, deren zweites Ende am Kolben (43) so angeordnet ist, daß es sich damit versetzt, und an dessen mittlerem Teil wenigstens ein Dehnungsmeßstreifen (59) befestigt ist, der ein Signal liefert, das proportional zur Versetzung des Kolbens (43) und somit zur Versetzung des Keils (13) ist, während dieser mit Druck beaufschlagt wird.

2. Verfahren nach Anspruch 1, dadurch gekennzeichnet, daß man vor der Ausführung der Schritte (b) bis (f) den Meßfühler (21) im Spalt (5) zwischen den starren Oberflächen des Rotors und des Stators anordnet und man eine Messung der Versetzung des Kolbens entsprechend verschiedener Arbeitsdrücke ausführt, und das man dann im Schritt (f) den in dieser Weise gemessenen Wert der Versetzung von dem Wert abzieht, der bei dergleichen Versetzung während der Ausübung eines Druckes auf den Keil (13) gemessen wird.

3. Verfahren nach Anspruch 1, dadurch gekennzeichnet, daß man dann, wenn der Schritt (b) einmal abgeschlossen ist, die gesamte Änderung der Breite des Spaltes (5) mittels wenigstens einer flexiblen instrumentierten Zunge (74) mißt, deren eines Ende fest am Halteelement (37) des Meßfühlers (31) angebracht ist und deren anderes Ende mit einem Schuh (71) versehen ist, der zur Anlage an einer festen Außenfläche des Stators (3) kommt und daran gleitet, und daß man dann im Schritt (f) den Wert dieser Änderung vom gemessenen Wert der Versetzung abzieht, um den tatsächlichen Wert der Versetzung des Keils (13) zu erhalten, wenn ein Druck auf letzteren ausgeübt wird.

4. Verfahren nach Anspruch 2 oder 3, dadurch gekennzeichnet, daß der Schritt (b) mit Hilfe mechanischer Einrichtungen (23, 25, 27) ausgeführt wird, die es erlauben, den Meßfühler (21) entlang jeder radialen Aussparung (7) zu versetzen.

5. Verfahren nach Anspruch 4, dadurch gekennzeichnet, daß die mechanischen Einrichtungen (23, 25, 27) so gesteuert werden, daß sie automatisch den Meßfühler (21) entlang jeder radialen Aussparung derart versetzen, daß der Meßfühler sich jedem der aufeinanderfolgenden Keile (13) zugewandt anordnet, die zwischen den Zähnen (15) in der besagten radialen Aussparung gleiten.

6. Verfahren nach Anspruch 5, dadurch gekennzeichnet, daß die mechanischen Einrichtungen (29, 31, 33) es auch erlauben, den Meßfühler (21) einer gegebenen Aussparung (7) zu wenigstens einer anderen benachbarten Aussparung zu versetzen.

7. Verfahren nach Anspruch 4, dadurch gekennzeichnet, daß die mechanischen Einrichtungen (23, 25, 27) von Hand gesteuert werden und daß der Meßfühler (21) mit einem faseroptischen Anzeigesystem (62) versehen ist, das es einer Bedienungsperson erlaubt, jeden Keil (13) aufzufinden und den Meßfühler (21) diesbezüglich anzuordnen.

8. Verfahren nach einem der Ansprüche 1 bis 3 und 5 bis 7, dadurch gekennzeichnet, daß das benutzte Fluid Druckluft ist.

9. Verfahren nach einem der Ansprüche 1 bis 3 und 5 bis 7, dadurch gekennzeichnet, daß der Schritt (f) darin besteht, daß der dem Zusammendrücken der elastischen Halteeinrichtungen (11) äqivalente Prozentsatz bestimmt wird, indem ein konstanter Druck im Schritt (c) ausgeübt und der Wert der dabei erhaltenen Versetzung gemessen wird.

10. Verfahren nach einem der Ansprüche 1 bis 3 und 5 bis 7, dadurch gekennzeichnet, daß der Schritt (f) darin besteht, daß der Prozentsatz bestimmt wird, der dem Zusammendrücken der elastischen Halteeinrichtungen (11) äquivalent ist, indem eine Versetzungsstrecke festgelegt und der Wert des dazu erforderlichen Druckes gemessen wird.

11. Verfahren nach einem der Ansprüche 1 bis 3 und 5 bis 7, dadurch gekennzeichnet, daß der Schritt (f) darin besteht, daß der Prozentsatz bestimmt ist, der dem Zusammendrücken der elastischen Halteeinrichtungen (11) äquivalent ist, indem ein Schwellenwert festgelegt wird, der auf einer Ordinate dem Ursprungspunkt der Kraftkurven in Abhängigkeit von der Versetzung entspricht, und ermittelt wird, ob der gemessene Wert der anliegenden Kraft diesen Schwellenwert erreicht oder nicht.

12. Vorrichtung zum quantitativen Bewerten der Verkeilung eines Wechselstromgenerators mit einem Rotor (1) und einem Stator (3), die gemeinsam einen Spalt (5) gegebener Breite begrenzen, wobei der Stator (3) mit radialen Aussparungen (7) versehen ist, die Öffnungen zum Spalt haben und in denen jeweils wenigstens ein Statorstab (9) mittels elastischer Halteeinrichtungen (11) festgehalten ist, die zur Anlage an Keilen (13) kommen, die im Spielraum von symmetrischen Zähnen (15) gleiten, die zu diesem Zweck im Stator an der Öffnung jeder Aussparung vorgesehen sind, welche Vorrichtung von einem Typ ist, der
(a) einen Meßfühler (21), der so bemessen ist, daß er in den Spalt eingesetzt werden kann, wobei der Meßfühler (21) mit einem beweglichen Element (43) versehen ist, das sich in eine Richtung quer zu dem besagten Spalt unter dem Einfluß eines von einem Fluid ausgeübten Druckes versetzen kann,
(b) Einrichtungen (23, 25, 27, 29, 31, 33) zum Anordnen des Meßfühlers (31) vor dem Keil (30), wo eine Bewertung erfolgen soll, derart, daß das bewegliche Element (43) des besagten Meßfühlers dem besagten Keil zugewandt ist,
(c) Einrichtungen (53, 54) zum Ausüben eines Druckes mittels des Fluides derart, daß das bewegliche Element (43) des Meßfühlers (21) versetzt wird und in Kontakt kommt, um auf den Keil (13) einen Druck auszuüben, während der Meßfühler sich am Rotor (1) anlehnt,
(d) Einrichtungen zum Messen des in dieser Weise ausgeübten Drucks, während das bewegliche Element (43) am Keil (13) anliegt, welcher Druck proportional zu der Kraft ist, die am Keil liegt, um die elastischen Halteeinrichtungen hinter dem besagten Keil zusammenzudrücken,
(e) Einrichtungen (57, 59) zum Messen der Versetzung des Keils (13), während der Druck ausgeübt wird, und
(f) Einrichtungen zum Bewerten der Verkeilung mittels der Kraft und der Versetzung umfaßt, die in dieser Weise gemessen wurden,
dadurch gekennzeichnet, daß
(g) der Meßfühler (21) ein Halteelement (37) aufweist, das die Form einer dünne Platte mit einer Dicke (h) etwas kleiner als die besagte Breite des Spaltes (5) hat, deren eine Außenfläche (39) mit einem Rücksprung (41) versehen ist, der die Funktion eines Zylinders hat, in dem ein Kolben (43) angeordnet ist, der die Funktion des beweglichen Elementes hat, welcher Kolben durch Eingeben des Fluides unter Druck in den Zylinder (41) fernbetätigbar ist, und
(h) die Einrichtungen (57, 59) zum Messen der Versetzung des Keils (13) aus Einrichtungen zum Messen der Versetzung des Kolbens in seinem Zylinder bestehen, welche Einrichtungen ihreseits aus wenigstens einer flexiblen Zunge (57) bestehen, die mit einem ersten Ende starr am Halteelement (37) des Meßfühlers befestigt ist, deren zweites Ende am Kolben (43) so angeordnet ist, daß es sich damit versetzt, und an dessen mittlerem Teil wenigstens ein Dehnungsmeßstreifen (59) befestigt ist, der ein Signal liefert, das proportional zur Versetzung des besagten Kolbens (43) und damit zur Versetzung des Keils (13) ist, während dieser mit Druck beaufschlagt wird.

13. Vorrichtung nach Anspruch 12, dadurch gekennzeichnet, daß die Einrichtungen (b) ein erstes mechanisches System (23, 25, 27) einschließen, das es erlaubt, den Meßfühler (21) entlang jeder radialen Aussparung (7) zu versetzen.

14. Vorrichtung nach Anspruch 13, dadurch gekennzeichnet, daß das erste mechanische System (23, 25, 27) von einem Motor (27) angetrieben wird und daß ein Steuersystem des Motors vorgesehen ist, um automatisch den Meßfühler (21) entlang jeder radialen Aussparung (7) derart zu versetzen, daß der Meßfühler sich jedem der aufeinanderfolgenden Keile (13) gegenüber anordnet, die zwischen den Zähnen (15) der besagten radialen Aussparung gleiten.

15. Vorrichtung nach Anspruch 14, dadurch gekennzeichnet, daß das erste mechanische System (23, 25, 27) eine Kette (23) einschließt, die um eine Trommel (25) läuft, die vom Motor (27) mitgenommen wird, welche Kette ein freies Ende aufweist, das in den Spalt (5) abwickelbar ist und an dem der Meßfühler (21) befestigt ist.

16. Vorrichtung nach den Ansprüchen 13, 14 oder 15, dadurch gekennzeichnet, daß die Einrichtungen (b) ein zweites mechanisches System (29, 31, 33) einschließen, das es erlaubt, den Meßfühler (21) einer gegebenen Aussparung (7) wenigstens zu einer anderen benachbarten Aussparung zu versetzen.

17. Vorrichtung nach Anspruch 16, dadurch gekennzeichnet, daß das zweite mechanische System (29, 31, 33) einen Schlitten (29), an dem das erste mechanische System (23, 25, 27) angebracht ist, und Einrichtungen (31) zur Translationsversetzung des Schlittens aufweist.

18. Vorrichtung nach Anspruch 13, dadurch gekennzeichnet, daß das erste mechanische System (23, 25, 27) von Hand gesteuert ist und daß der Meßfühler (21) mit einem Anzeigesystem (62) versehen ist, das es eine Bedienungsperson erlaubt, jeden Keil (13) aufzufinden und den Meßfühler diesbezüglich anzuordnen.

19. Vorrichtung nach Anspruch 18, dadurch gekennzeichnet, daß das erste mechanische System (23, 25, 27) eine Kette (23) einschließt, die um eine Trommel (25) läuft, die von einem Motor (27) mitgenommen wird, welche Kette ein freies Ende aufweist, das in den Spalt (5) abwickelbar ist und an dem der Meßfühler (21) befestigt ist.

20. Vorrichtung nach Anspruch 18 oder 19, dadurch gekennzeichnet, daß das Anzeigesystem (62) eine optische Faser (62) mit einem als Fernrohr dienenden Ende umfaßt, das direkt am Meßfühler (21) befestigt ist.

21. Vorrichtung nach Anspruch 20, dadurch gekennzeichnet, daß das Ende der optischen Faser (62), das als Fernrohr dient, quer zum Kolben (23) in einem Hohlraum (63) verläuft, der im Halteelement (37) des Meßfühlers (21) vorgesehen ist, und einem Spiegel (65) zugewandt ist, der in diesem Hohlraum aufgenommen ist, und daß Beleuchtungseinrichtungen (67) auf der Höhe des besagten Meßfühlers vorgesehen sind, um die Sichtbarmachung des zu bewertenden Keils (13) mittels der optischen Faser (62) zu erleichtern.

22. Vorrichtung nach einem der Ansprüche 12 bis 15, 17 bis 19 und 21, dadurch gekennzeichnet, daß sie außerdem wenigstens eine Distanzscheibe (77) aufweißt, die direkt am Halteelement (37) des Meßfühlers (21) auf seiner dem Kolben (43) gegenüberliegenden Seite befestigbar ist, um die Höhe (h) des Meßfühlers zu vergrößern und somit seine Benutzung in einem größeren Spalt (5) zu ermöglichen.

23. Vorrichtung nach einem der Ansprüche 12 bis 15, 17 bis 19 und 21, dadurch gekennzeichnet, daß die Einrichtungen (f) ein elektronisches Konditionierungssystem und ein Informationsverarbeitungssystem (69) umfassen.

24. Vorrichtung nach Anspruch 23, dadurch gekennzeichnet, daß das eingegebene Fluid Druckluft ist und daß der Aufbau der Vorrichtung die Form eines tragbaren Baukastens hat.

25. Vorrichtung nach einem der Ansprüche 12 bis 15, 17 bis 19, 21 und 24, dadurch gekennzeichnet, daß sie gleichfalls wenigstens eine flexible instrumentalisierte Zunge (74) aufweist, die mit einem Ende fest am Halteelement (37) des Meßfühlers (21) angebracht ist und deren anderes Ende mit einem Schuh (71) versehen ist, der zur Anlage an einer starren Oberfläche des Stators (3) kommt und daran gleitet, welche Zunge (74) eine Messung der gesamten Änderung der Breite des Spaltes (5) an der Stelle liefert, an der sich der Meßfühler (21) befindet, um die tatsächliche Versetzung des Keiles (13) zu bestimmen, wenn auf letzteren ein Druck ausgeübt wird.

26. Vorrichtung nach Anspruch 25, dadurch gekennzeichnet, daß sie zwei derartige flexible instrumentalisierte Zungen (74) aufweist, die am Halteelement (27) des Meßfühlers (21) derart befestigt sind, daß ihre Schuhe (71) auf der einen und der anderen Seite der Aussparung (7) verlaufen, in der der zu bewertende Keil angebracht ist.

## Claims

1. A method for quantitatively evaluating the stator wedge tightness of an alternator comprising a rotor(1) and a stator (3) together defining an air-gap (5) of a given width, said stator (3) being provided with radial slots having outlets in communication with the air-gap and in each of which is retained at least one stator coil (9) by means of a resilient holding means (11) which abuts against stator wedges (13) slidably inserted into a set of symmetrical grooves (15) provided therefor in the stator at the outlet of each slot (7), said method comprising the steps of:
(a) inserting into the air-gap (5) a sensor (21) provided with a mobile element (43) capable of being displaced in a transverse direction relative to said air-gap by the effect of a pressure exerted by a fluid;
(b) positioning the sensor (21) in front of the stator wedge (13) the tightness of which is to be evaluated in such a manner that its mobile element (43) faces said stator wedge;
(c) exerting pressure on said fluid to displace the mobile element (43) of the sensor and to cause this element to contact first and then press against said stator wedge (13) while the sensor (21) is backed against the rotor (1);
(d) measuring the so-exerted pressure, said pressure being proportional to the force applied to the stator wedge (13) to compress the resilient holding means (11) behind said stator wedge;
(e) measuring the displacement of the stator wedge (13) as the pressure is exerted; and
(f) determining the tightness of the stator wedge from the so measured force and displacement;
characterized in that:
(g) the sensor (21) that is used, has a body (32) in the shape of a thin plate having a thickness slightly smaller than the width of said air-gap (5), said plate having one face (34) provided with a recess acting as a cylinder in which is mounted a piston (43) acting as said mobile element, said piston being remotely actuatable by injection of the pressurized fluid into the cylinder (41); and
(h) the measurement of the displacement of the wedge (13) is achieved by measuring the displacement of the piston (43) in its cylinder by means of at least one resilient blade (57) having a first extremity rigidly fixed to the body (37) of the device; a second extremity mounted on the piston (43) so as to be displaced with it, and a central portion on which is attached at least one strain gauge (59) giving as signal proportional to the displacement of said piston (43) and thence to the displacement of the stator wedge (13) when the latter is compressed.

2. The method according to claim 1, characterized in that before carrying out steps (b) to (f), the sensor (21) is positioned in the air-gap (5) between rigid surfaces of the rotor and the stator and the value of the displacement of the piston corresponding to the working pressures is measured, and in step (f), the so measured displacement value is subtracted from the measured value of the same displacement when pressure is exerted on the stator wedge (13).

3. The method according to claim 1, characterized in that when step (b) is completed, any variation in the width of the air-gap (5) is measured by at least one resilient strain gauge blade having one end fixed to the body (37) of the sensor (21) and another end provided with a shoe (71) that contacts and slides onto a rigid surface of the stator (3), and in step (f), the so-measured variation is substracted from the measured value of the displacement in order to obtain the actual value of the displacement of the stator wedge (13) when pressure is exerted onto the latter.

4. The method according to claim 2 or 3, characterized in that step (b) is carried out by mechanical means (23,26,27) devised to displace the sensor (21) along each radial slot (7).

5. The method according to claim 4, characterized the mechanical means (23,25,27) are controlled to automatically displace the sensor (21) along each radial slot so that this sensor is positioned in front of each of the successive stator wedge (13) slidably inserted into the grooves (15) made in said radial slot.

6. The method according to claim 5, characterized in that said mechanical means (29,31,33) also permits to displace the sensor (21) from one given slot (7) to at least one other adjacent slot.

7. The method according to claim 4, wherein said mechanical means (23,25,27) are manually controlled and the sensor (21) is provided with a optic fiber visualization system (62) allowing an operator to locate each stator wedge (13) and to position the sensor (21) relative to said stator wedge.

8. The method according to any one of claims 1 to 3 and 5 to 7, characterized in that the fluid used is compressed air.

9. The method according to any one of claims 1 to 3 and 5 to 7, characterized in that step (f) consists in determining the equivalent percentage of compression of the resilient holding means (11) by exerting a constant pressure during step (c) and by measuring the displacement that is so-obtained.

10. The method according to any one of claims 1 to 3 and 5 to 7, characterized in that step (f) consists in determining the equivalent percentage of compression of the resilient holding means (11) by setting a length of displacement and by measuring the pressure that is required to achieve it.

11. The method according to any one of claims 1 to 3 and 5 to 7, characterized in that step (f) consists in determining the equivalent percentage of compression of the resilient holding means (11) by setting a threshold value corresponding to an ordinate of the curves giving the force as a function of the displacement, and then verifying if the measured value of the force that is exerted has reached or not this threshold value.

12. An apparatus for quantitatively evaluating the stator wedge tightness of an alternator comprising a rotor (11) and a stator (3) together defining an air-gap (5) of a given width, said stator (3) being provided with radial slots (7) having outlets in open communication with said air-gap and in each of which is retained at least one stator coil (9) by means of resilient holding means (11) abutting stator wedges (13) slidably inserted into a set of symmetric grooves (15) provided therefor in the stator at the outlet of each slot, the apparatus comprising:
(a) a sensor (21) dimensioned so as to be insertable into said air-gap (5), the sensor (21) being provided with a mobile element (13) capable of displacement in a direction transverse to said air-gap by the effect of a pressure exerted by a fluid;
(b) means (23, 25, 27, 29, 31, 33) for positioning the sensor (21) in front of a stator wedge (13)where the tightness evaluation is required, thereby allowing the mobile element (43) of said sensor to face said stator wedge;
(c) means (53,54) for exerting pressure by means of a fluid to displace the mobile element (43) of the sensor (21) and cause it to contact and press against the stator wedge (13) while the sensor is backed against the rotor (1);
(d) means for measuring the pressure that is exerted when the mobile element (43) presses against the stator wedge (13), such pressure being proportional to the force applied stator wedge for compressing the resilient holding means behind said stator wedge;
(e) means (57,59) for measuring the displacement of the stator wedge (13) which the pressure is being exerted; and
(f) means for evaluating the tightness of the stator wedge by means of the so-measured force and displacement;
characterized in that:
(g) said sensor (21) has a body (37) in the shape of a thin plate having a thickness (h) slightly smaller than the width of said air-gap (5), said body having one face (39) provided with a recess (41) acting as a cylinder in which is mounted a piston (43) acting as said mobile element, this piston being remotely controlled by injecting the said fluid under pressure into the cylinder (41); and
(h) said means (57,59) for measuring the displacement of a stator wedge (13) consists of means for measuring the displacement of the piston in said cylinder, said piston deplacement measuring means consisting of at least one resilient blade (57)having a first extremity rigidly fixed to the body (37) of the sensor, a second extremity mounted on the piston (13) so as to be displaced therewith, and a central portion on which is attached at least one strain gauge (59) giving a signal proportional to the displacement of said piston (43) and thence to the displacement of the stator wedge (13) when the latter is displaced.

13. The apparatus according to claim 12, characterized in that the means (b) comprises a first mechanical system (23,25,27) allowing displacement of the sensor (21) along each radial slot (7).

14. The apparatus according to claim 13, characterized in that the first mechanical system (23,25,27) is operated by a motor (27) and in that a control device for the motor is provided for automatically displacing the sensor (21) along each radial slot (7), whereby this sensor can be positioned in front of each of the successive stator wedges slidably inserted in the grooves (15) of said radial slot.

15. The apparatus according to claim 14, characterized in that the first mechanical system (23,25,27) includes a chain (23) rolled on a drum (25) driven by the motor (27), this chain having a free end unrollable into the air-gap (15) and to which the sensor (21) is attached.

16. The apparatus according to claim 13, 14 or 15, characterized in that the means (b) also comprises a second mechanical system (29,31,33) allowing displacement of the sensor (21) from a given slot (7) to at least one other adjacent slot.

17. The apparatus according to claim 16, characterized in thta the second mechanical system (29,31,33) includes a carriage (29) on which the first mechanical system (23,25,27) is mounted and means (31) to displace the carriage in translation.

18. The apparatus according to claim 14, characterized in that the first mechanical system (23,25,27) is manually controlled and the sensor (21) is provided with a visualization system (62) allowing an operator to locate each stator wedge (13) and to position the sensor relative to the same.

19. The apparatus according to claim 18, characterized in that the first mechanical system (23,25,27) includes a chain (23) rolled on a drum (25) driven by a motor (27), this chain having a free end unrollable into the air-gap (5) and to which the sensor (21) is attached.

20. The apparatus according to claim 18 or 19, characterized in that the visualization system (62) comprises an optic fiber (62) having an extremity acting as a spectacle, which is fixed to the sensor (21).

21. The apparatus according to claim 20, characterized in that the extremity of the optic fiber (63) acting as a spectacle extends transversely to the piston (43) in a cavity (63) provided in the body (37) of the sensor (21), and faces a mirror (65) incorporated in the said cavity, and is that lighting means (67) are provided at the level of said sensor to facilitate the visualization of a stator wedge (13) to be evaluated, with the optic fiber (62).

22. The apparatus according to any one of claims 12 to 15, 17 to 19 and 21, characterized in that the apparatus further comprises at least one spacing plate (77) attachable to the body (37) of the sensor (21) opposite to the face where the piston (43) is mounted, in order to increase the thickness (h) of said sensor and thus, allow use of it in an air-gap (5) of larger width.

23. The apparatus according to any one of claims 12 to 15, 17 to 19 and 21, characterized in that said means (f) includes an electronic ccnditioning system and a computer processing system (69).

24. The apparatus according to claim 23, characterized in that said injected fluid is compressed air and the apparatus is in the form of a portable kit.

25. The apparatus according to any one of claims 12 to 15, 17 to 19, 21 and 24, characterized in that it further comprises at least one resilient strain gauge blade (74) having one end fixed to the body (37) of the sensor (21) and another end provided with a shoe (71) that contacts and slides onto a rigid surface of the stator (3), said strain gauge blade (74) measuring any variation of the width of the air-gap (5) at the location where the sensor (21) is located and thus permitting to determine the actual displacement of the stator wedge (13) when pressure is exerted onto the latter.

26. The apparatus of claim 25, characterized in that it comprises two such resilient strain gauge blades (74) fixed to the body (37) of the sensor (21) so that their shoes (71) extend on both sides of the slot (7) in which the stator wedge to be evaluated is mounted.
